# EUROPÄISCHE PATENTANMELDUNG

(11) **EP 4 389 444 A1**
(43) Veröffentlichungstag der Anmeldung: **26.06.2024**
(21) Anmeldenummer: 22215595.4
(22) Anmeldetag: 21.12.2022
(51) Int. Cl.: B42D 25/324, B42D 25/328, B42D 25/373, B42D 25/425, B42D 25/45, G02B 5/18

(54) **SICHERHEITSELEMENT**

(71) Anmelder: Hueck Folien Gesellschaft m.b.H., 4342 Baumgartenberg (AT)
(72) Erfinder: EGGINGER, Martin, 4040 Linz (AT); FUCHSBAUER, Anita, 4030 Linz (AT); TRAßL, Stephan, 4342 Baumgartenberg (AT); NOTHDURFT, Philipp, 4310 Mauthausen (AT)
(74) Vertreter: Burger, Hannes

(57) **Zusammenfassung**

Die Erfindung betrifft ein Sicherheitselement (1) insbesondere für Wertpapiere, Sicherheitspapiere oder Sicherheitsgegenstände, wie Banknoten, Ausweise, Kreditkarten, wobei das Sicherheitselement (1) zumindest einen Bereich (2) mit optisch wirksamen, diffraktiven Strukturen (3) aufweist, wobei ein durch die optisch wirksamen, diffraktiven Strukturen (3) erzeugter Gesamteindruck für ein unbewaffnetes Auge achromatisch erscheint.

## Beschreibung

Die Erfindung betrifft ein Sicherheitselement insbesondere für Wertpapiere, Sicherheitspapiere oder Sicherheitsgegenstände, wie Banknoten, Ausweise, Kreditkarten, wobei das Sicherheitselement zumindest einen Bereich mit optisch wirksamen, diffraktiven Strukturen aufweist.

Sicherheitselemente der oben genannten Art werden üblicherweise verwendet, um die Fälschungssicherheit von Wertpapieren oder Sicherheitspapieren, wie Banknoten, Ausweise, Kreditkarten, Bankomatkarten, Tickets etc. zu erhöhen.

Üblicherweise werden achromatisch erscheinende Sicherheitsmerkmale durch Reliefstrukturen dargestellt, welche auf Grund ihrer Größe bzw. Struktureigenschaften auf Lichtreflexion basieren. Entsprechende Strukturen werden oft als Mikrospiegel bzw. als Strukturen mit reflektiven Facetten beschrieben. Die dabei erzielten optischen Effekte sind häufig Bewegungseffekte (ein makroskopisches Motiv bewegt sich) oder dreidimensional erscheinende Motive. Diffraktive Strukturen hingegen bewirken Lichtbeugung und werden somit meist auf Grund ihres optischen Erscheinungsbildes als irisierende optische Effekte wahrgenommen. Dazu zählen klassische holographische Motive. Zusätzlich können unter Verwendung von sogenannten diffraktiven Mottenaugenstrukturen unter einem weiten Betrachtungswinkelbereich schwarz erscheinende Sicherheitsmerkmale erzeugt werden, welche unter flachen Betrachtungswinkeln die entsprechenden Beugungsfarben aufweisen. Diese unterschiedlichen diffraktiven Reliefstrukturen haben somit gemeinsam, dass sie ein färbiges Erscheinungsbild aufweisen. Häufig werden so statische Motive dargestellt, wobei auch die Erzeugung von Bewegungseffekten möglich ist.

Es ist eine Aufgabe der Erfindung, ein Sicherheitselement zu schaffen, welches eine erhöhte Fälschungssicherheit aufweist.

Die oben genannte Aufgabe wird mit einem Sicherheitselement der eingangs genannten Art erfindungsgemäß dadurch gelöst, dass ein durch die optisch wirksamen, diffraktiven Strukturen erzeugter Gesamteindruck für ein unbewaffnetes Auge achromatisch erscheint.

Mit der erfindungsgemäßen Lösung wird die Fälschungssicherheit wesentlich erhöht, da die Strukturen einen achromatischen Eindruck, wie er üblicherweise mit reflektiven Strukturen erzielt wird, aufweisen, der zu Grunde liegende diffraktive Charakter der Strukturen aber durch entsprechende optische Messmethoden (z.B. winkelabhängige optische Messung mittels hochauflösenden Mikroskopen) überprüft werden kann.

Vorteilhafterweise weist das Sicherheitselement ein aus Bereichen, insbesondere Pixel, aufgebautes Bild auf.

Als besonders vorteilhaft hat sich herausgestellt, dass die optisch wirksamen Strukturen unregelmäßig angeordnet sind, wobei insbesondere eine Frequenz, eine Ausrichtung, Bereichsgrößen und/oder Konturen von Bereichen, in welchen die Strukturen angeordnet sind, und/oder Formen der Strukturen, beispielsweise Krümmungen der Strukturen variieren können.

Darüber hinaus kann es vorgesehen sein, dass der achromatische Gesamteindruck durch eine additive Farbmischung von durch die Strukturen erzeugten Farben hervorgerufen ist.

Gemäß einer bevorzugten Weiterbildung der Erfindung kann es vorgesehen sein, dass einzelne Bereiche, insbesondere Pixel, jeweils aus mehreren optisch wirksamen Strukturen gebildet sind, wobei die optisch wirksamen Strukturen in einzelnen Bereichen, insbesondere Pixel, so orientiert sind, dass jeder dieser Bereich, insbesondere jedes dieser Pixel, achromatisch erscheint.

Bei einer vorteilhaften Variante der Erfindung kann es zudem vorgesehen sein, dass die Strukturen vollflächig oder partiell von zumindest einer optischen Effektschicht abgedeckt sind.

Als besonders vorteilhaft hat sich herausgestellt, dass die Strukturen geprägte Strukturen, insbesondere in eine Prägelackschicht geprägte Strukturen, sind.

Besonders bevorzugt ist es, dass die optisch wirksamen Strukturen durch additive Farbmischung von an den Strukturen gebeugten Lichts in Draufsicht achromatisch erscheinen.

Gemäß einer vorteilhaften Variante der Erfindung kann es vorgesehen sein, dass eine maximale Ausdehnung der Bereiche, insbesondere der Pixel jeweils kleiner als die Auflösungsgrenze des menschlichen Auges, insbesondere kleiner als 300 µm ist.

Gemäß einer vorteilhaften Weiterbildung der Erfindung ist es vorgesehen, dass die optische Effektschicht als Dünnschichtelement ausgebildet ist und zumindest eine Absorberschicht und zumindest eine Distanzschicht aufweist.

Als besonders vorteilhaft hat sich erwiesen, dass die zumindest eine Absorberschicht zumindest ein metallisches Material, insbesondere ausgewählt aus der Gruppe von Nickel, Titan, Vanadium, Chrom, Kobalt, Palladium, Eisen, Wolfram, Molybdän, Niob, Aluminium, Silber, Kupfer und/oder Legierungen dieser Materialien umfasst oder aus zumindest einem dieser Materialien hergestellt ist.

Als besonders vorteilhaft hat sich weiters herausgestellt, dass die zumindest eine Distanzschicht ein niederbrechendes dielektrisches Material mit einem Brechungsindex kleiner oder gleich 1,65, insbesondere ausgewählt aus der Gruppe Aluminiumoxid (Al₂O₃), Metallfluoride, beispielsweise Magnesiumfluorid (MgF₂), Aluminiumfluorid (AlF₃), Cerfluorid (CeF₃), Natrium-Aluminium-Fluoride (z.B. Na₃AlF₆ oder Na₅Al₃F₁₄), Siliziumoxid (SIOₓ), Siliziumdioxid (SiO₂), Neodymfluorid (NdF₃), Lanthanfluorid (LaF₃), Samariumfluorid (SmF₃), Bariumfluorid (BaF₂), Calciumfluorid (CaF₂), Lithiumfluorid (LiF), niederbrechende organische Monomere und/oder niederbrechende organische Polymere oder zumindest ein hochbrechendes dielektrisches Material mit einem Brechungsindex größer als 1,65, insbesondere ausgewählt aus der Gruppe Zinksulfid (ZnS), Zinkoxid (ZnO), Titandioxid (TiO₂), Kohlenstoff (C), Indiumoxid (In₂O₃), Indium-Zinn-Oxid (ITO), Tantalpentoxid (Ta₂O₅), Ceroxid (CeO₂), Yttriumoxid (Y₂O₃), Europiumoxid (Eu₂O₃), Eisenoxide wie zum Beispiel Eisen(II,III)oxid (Fe₃O₄) und Eisen(III)oxid (Fe₂O₃), Hafniumnitrid (HfN), Hafniumcarbid (HfC), Hafniumoxid (HfO₂), Lanthanoxid (La₂O₃), Magnesiumoxid (MgO), Neodymoxid (Nd₂O₃), Praseodymoxid (Pr₆O₁₁), Samariumoxid (Sm₂O₃), Antimontrioxid (Sb₂O₃), Siliziumcarbid (SiC), Siliziumnitrid (Si₃N₄), Siliziummonoxid (SiO), Selentrioxid (Se₂O₃), Zinnoxid (SnO₂), Wolframtrioxid (WO₃), hochbrechende organische Monomere und/oder hochbrechende organische Polymere umfasst oder aus zumindest einem dieser Materialien hergestellt ist.

Eine bevorzugte Ausführungsform sieht vor, dass die als Dünnschichtelement ausgebildete optische Effektschicht weiters noch zumindest eine Reflexionsschicht und/oder eine zweite Absorberschicht umfasst, wobei die zumindest eine Distanzschicht zwischen der zumindest einen ersten Absorberschicht und der zumindest einen Reflexionsschicht und/oder der zumindest einen zweiten Absorberschicht angeordnet ist.

Bevorzugt ist es, dass die zumindest eine Reflexionsschicht zumindest ein metallisches Material, insbesondere ausgewählt aus der Gruppe Silber, Kupfer, Aluminium, Gold, Platin, Niob, Zinn, oder aus Nickel, Titan, Vanadium, Chrom, Kobalt und Palladium oder Legierungen dieser Materialien, insbesondere Kobalt-Nickel-Legierungen oder zumindest ein hochbrechendes dielektrisches Material mit einem Brechungsindex von größer als 1,65, insbesondere ausgewählt aus der Gruppe Zinksulfid (ZnS), Zinkoxid (ZnO), Titandioxid (TiO₂), Kohlenstoff (C), Indiumoxid (In₂O₃), Indium-Zinn-Oxid (ITO), Tantalpentoxid (Ta₂O₅), Ceroxid (CeO₂), Yttriumoxid (Y₂O₃), Europiumoxid (Eu₂O₃), Eisenoxide wie zum Beispiel Eisen(II,III)oxid (Fe₃O₄) und Eisen(III)oxid (Fe₂O₃), Hafniumnitrid (HfN), Hafniumcarbid (HfC), Hafniumoxid (HfO₂), Lanthanoxid (La₂O₃), Magnesiumoxid (MgO), Neodymoxid (Nd₂O₃), Praseodymoxid (Pr₆O₁₁), Samariumoxid (Sm₂O₃), Antimontrioxid (Sb₂O₃), Siliziumcarbid (SiC), Siliziumnitrid (Si₃N₄), Siliziummonoxid (SiO), Selentrioxid (Se₂O₃), Zinnoxid (SnO₂), Wolframtrioxid (WO₃), hochbrechende organische Monomere und/oder hochbrechende organische Polymere umfasst oder aus zumindest einem dieser Materialien hergestellt ist.

Weiters kann es vorgesehen sein, dass es eine Trägerschicht aus einem Kunststoff umfasst, wobei insbesondere der Kunststoff aus einem lichtdurchlässigen und/oder thermoplastischen Kunststoff gebildet ist, und dass die Trägerschicht bevorzugt zumindest eines der Materialien aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon, (PEEK) Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefincopolymere (COC), Polyoximethylen (POM), Acrylnitrilbutadienstyrol (ABS), Polyvinylcholrid (PVC) Ethylentetrafluorethylen (ETFE), Polytetrafluorethylen (PTFE), Polyvinylfluorid (PVF), Polyvinylidenfluorid (PVDF), Ethylen-Tetrafluorethylen-Hexafluorpropylen-Fluorterpolymer (EFEP), Cellulose- oder Lignin-basierte Kunststoffe, Polyhydroxyalkanoate (PHA), thermo-plastische Stärke (TPS), Polymilchsäure (PLA), Polycaprolacton (PCL), Polybutylensuccinat (PBS), und Polybutylenadipat-terephthalat (PBAT) und/oder zumindest einen recycelten und/oder biologisch und/oder marin abbaubare Kunststoff und/oder Mischungen und/oder Co-Polymere dieser Materialien umfasst oder aus zumindest einem dieser Materialien hergestellt ist.

Weiteres vorteilhaft kann es sein, dass das Sicherheitselement mit weiteren farbkippenden Schichten, insbesondere Schichten mit farbkippenden Pigmenten oder Flüssigkristallen und/oder mit maschinenlesbaren Merkmalen, ausgestattet ist, wobei es sich bei den maschinenlesbaren Merkmalen insbesondere um Magnet-codierungen, elektrisch leitfähige Schichten, elektromagnetische Wellen absorbierende und/oder reemittierende Stoffe handelt. Insbesondere ist es möglich, dass das Sicherheitselement zusätzliche Schichten aufweist, welche zusätzlichen Schichten insbesondere Schutzlacke, Heißsiegellacke, Kleber, Primer und/oder Folien umfassen.

Zum besseren Verständnis der Erfindung wird diese anhand der nachfolgenden Figuren näher erläutert.

Es zeigt in stark vereinfachter, schematischer Darstellung:

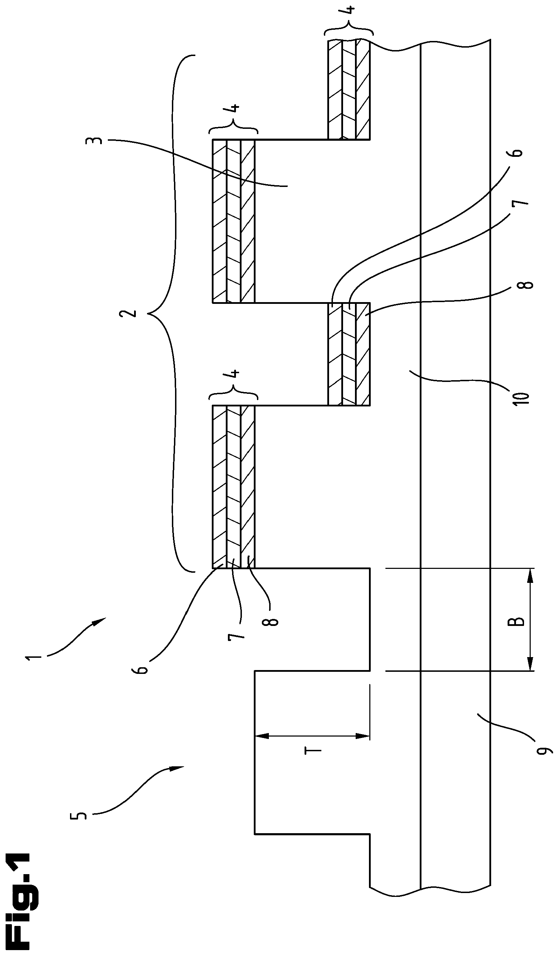

Fig. 1 einen Schichtaufbau eines erfindungsgemäßen Sicherheitselements.

Gemäß Fig. 1 weist ein erfindungsgemäßes Sicherheitselement 1, wie es zur Fälschungssicherheit von Wertpapieren, Sicherheitspapieren oder Sicherheitsgegenständen, wie Banknoten, Ausweisen, Kreditkarten, Tickets, etc. verwendet wird, einen Bereich 2 auf, in dem Strukturen 3 angeordnet sind. Der Bereich 2 kann sich über einen Teil des Sicherheitselements 1 oder aber auch über das gesamte Sicherheitselement 1 erstrecken. Die optisch wirksamen Strukturen 3 des Bereichs 2 bilden Bereiche, insbesondere Pixel, eines Bildes. In der weiteren Beschreibung wird aufgrund der einfacheren Lesbarkeit anstelle des Begriffes Bereich oder Pixel stellvertretend nur der Begriff Pixel verwendet. Mehrere Strukturen 3 können ein Pixel bilden.

Das aus den Pixel gebildete Bild kann ein Motiv, beispielsweise ein Porträt, eine Landschaft, ein abstraktes geometrisches Zeichen, Logo oder ein alphanumerisches Zeichen und/oder ein Ikon und/oder eine Codierung und/oder eine Abfolge von Zeichen darstellen oder umfassen.

Eine maximale Ausdehnung der Pixel liegt bevorzugt zwischen 0,5 µm und 100 µm.

Bei den Strukturen 3 handelt es sich um lichtbeugende bzw. diffraktive Strukturen. Durch diffraktive Strukturen lassen sich beispielsweise Hologramme, Bewegungsbilder oder auch statische Bilder realisieren. Ein von den optisch wirksamen Strukturen 3 erzeugter Gesamteindruck erscheint für ein unbewaffnetes Auge achromatisch.

Der zu Grunde liegende diffraktive Charakter der Strukturen 3 kann entweder nur in einem sehr engen, von dem diffraktiven Gitterabstand abhängigen, den achromatischen Gesamteindruck jedoch nicht negativ beeinflussenden Winkel, ersichtlich sein oder durch entsprechende optische Messmethoden (z.B. winkelabhängige optische Messung mittels hochauflösenden Mikroskopen) bestimmt werden.

Die Strukturen 3 können beispielsweise ein Hologramm erzeugen und können beispielsweise eine Tiefe T von größer als 500 nm, insbesondere zwischen 500 nm - 4 µm, aufweisen. Unter Tiefe T einer Struktur 3 wird in dem vorliegenden Zusammenhang ein Normalabstand zwischen dem Niveau des tiefsten Punktes und dem Niveau des höchsten Punktes der Struktur 3 verstanden. Die Breite B einer Struktur 3 entspricht hierbei der minimalen Breite einer Vertiefung der Struktur 3. Bevorzugt weisen die Strukturen 3 ein Aspektverhältnis von 0,05 - 8 auf. Unter Aspektverhältnis wird für Strukturen mit einem rechtwinkeligen Neigungswinkel, beispielsweise säulenartige Strukturen, das Verhältnis von Tiefe T zu Breite B der Strukturen 3 verstanden. Bei Strukturen mit einem Neigungswinkel abweichend von 90°, beispielsweise sägezahnartige Strukturen, stellt das Aspektverhältnis das Verhältnis von Tiefe T zu einem Peak zu Peak Abstand der Strukturen dar.

Für die Darstellung von achromatisch erscheinenden Motiven mit diffraktiven optisch wirksamen Strukturen 3 gibt es mehrere Möglichkeiten.

Die einzelnen Strukturen 3 können beispielsweise so ausgelegt sein, dass die dabei erzeugten Beugungsfarben beim Betrachter (in einem Abstand vom Sicherheitselement selbst), mittels additiver Farbmischung überlappen und somit ein weißes Erscheinungsbild aufweisen, wodurch in Summe ein achromatisches Verhalten erzeugt wird.

Die einzelnen Pixel können unter einem weiten Betrachtungsbereich jeweils ein färbiges Erscheinungsbild aufweisen. Durch gezielte Kombination von Pixeln mit unterschiedlicher Ausrichtung der optisch wirksamen diffraktiven Strukturen unterscheidet sich die jeweilige Farbe der einzelnen Pixel. Im Summe kommt es durch additive Farbmischung zu einem achromatischen Erscheinungsbild.

Alternativ oder zusätzlich können in einem Pixel unterschiedliche diffraktive Strukturen 3 vorhanden sein, wodurch es bereits innerhalb eines Pixels zu einer additiven Farbmischung kommt und sowohl das Pixel als auch das Gesamtmotiv achromatisch erscheinen.

Der achromatische Eindruck der diffraktiven Strukturen lässt sich zusätzlich oder alternativ zu einer additiven Farbmischung beispielsweise auch dadurch erreichen, dass die Strukturen unregelmäßig angeordnet werden. Hierbei wird im Wesentlichen auf eine gezielte Anordnung der diffraktiven Strukturen in geordnete Pixel verzichtet werden. Der Bereich 2 kann dann gemäß einer Freiform Anordnung mit den diffraktiven Strukturen 3 gefüllt werden. Dadurch wird der diffraktive Effekt durch die Unordnung unterdrückt. In diesem Zusammenhang ist es besonders von Vorteil, wenn es die Strukturen im Wesentlichen zufällig verteilt werden, wobei insbesondere eine Frequenz, eine Ausrichtung, Bereichsgrößen und/oder Konturen von Bereichen, in welchen die Strukturen angeordnet sind, und/oder Formen der Strukturen, beispielsweise Krümmungen der Strukturen variieren können.

Zur Berechnung einer Anordnung der Strukturen 3 kann eine Software zum Einsatz kommen, die beispielsweise anhand der oben genannten Randbedingungen die Anordnung der optisch wirksamen Strukturen 3 ermittelt.

Durch das achromatische Erscheinungsbild der optisch wirksamen Strukturen 3 lässt die Fälschungssicherheit, auch wenn keine zusätzliche optische Effektschicht vorhanden ist, wesentlich erhöhen, da wie bereits oben erwähnt, der diffraktive Charakter der Strukturen, wenn überhaupt, entweder nur unter sehr bestimmten Betrachtungswinkeln ersichtlich wird bzw. durch entsprechende optische Hilfsmittel erkannt/gemessen werden kann.

Es ist auch möglich, dass nur ein Teilbereich des darzustellenden Motivs (statisch oder Bewegung) mit einem achromatischen Erscheinungsbild ausgestattet ist und ein weiterer Teilbereich z.B. gezielt eine färbiges Erscheinungsbild (auf Basis von diffraktiven Strukturen) aufweist. Dadurch können gezielt färbige Teilbereiche in einem ansonsten achromatischen Motiv (und umgekehrt) dargestellt werden.

Auf die Strukturen 3 kann eine optische Effektschicht 4 vollflächig oder partiell aufgebracht sein.

Es kann beispielswiese auch ein Bereich 5 vorgesehen sein, in welchem die Effektschicht 4 ausgespart ist. Die optische Effektschicht 4 kann direkt auf den Strukturen 3 angeordnet sein. Es kann aber auch noch eine zusätzliche Haftvermittlerschicht zwischen den Strukturen 3 und der optischen Effektschicht 4 angeordnet sein. Das Material der Haftvermittlerschicht kann beispielsweise ausgewählt sein aus der Gruppe von Nickel, Titan, Mangan, Vanadium, Chrom, Kobalt, Palladium, Eisen, Wolfram, Molybdän, Niob, Aluminium, Silber, Kupfer und/oder Legierungen dieser Materialien, insbesondere zumindest eine Nickelchromlegierung, umfasst oder aus zumindest einem dieser Materialien hergestellt ist. Besonders bevorzugt ist das Material der Haftvermittlerschicht Chrom oder eine Nickelchromlegierung, wie beispielsweise Inconel.

Die optische Effektschicht 4 ist bevorzugt als Dünnschichtelement ausgebildet. Die als Dünnschichtelement ausgebildete optische Effektschicht 4 umfasst zumindest eine Absorberschicht 6 und zumindest eine Distanzschicht 7.

Die Absorberschicht 6 kann ein metallisches Material, insbesondere ausgewählt aus der Gruppe von Nickel, Titan, Vanadium, Chrom, Kobalt, Palladium, Eisen, Wolfram, Molybdän, Niob, Aluminium, Silber, Kupfer und/oder Legierungen dieser Materialien umfassen oder aus zumindest einem dieser Materialien hergestellt sein.

Die zumindest eine Distanzschicht 7 kann z.B. aus einem dielektrischen Material gebildet sein. Weiters kann die zumindest eine Distanzschicht 7 zumindest ein niederbrechendes dielektrisches Material mit einem Brechungsindex kleiner oder gleich 1,65, insbesondere ausgewählt aus der Gruppe Aluminiumoxid (Al₂O₃), Metallfluoride, beispielsweise Magnesiumfluorid (MgF₂), Aluminiumfluorid (AlF₃), Cerfluorid (CeF₃), Natrium-Aluminium-Fluoride (z.B. Na₃AlF₆ oder Na₅Al₃F₁₄), Siliziumoxid (SIOx), Siliziumdioxid (SiO₂), Neodymfluorid (NdF₃), Lanthanfluorid (LaF₃), Samariumfluorid (SmF₃), Bariumfluorid (BaF₂), Calciumfluorid (CaF₂), Lithiumfluorid (LiF), niederbrechende organische Monomere und/oder niederbrechende organische Polymere oder zumindest ein hochbrechendes dielektrisches Material mit einem Brechungsindex größer als 1,65, insbesondere ausgewählt aus der Gruppe Zinksulfid (ZnS), Zinkoxid (ZnO), Titandioxid (TiO₂), Kohlenstoff (C), Indiumoxid (In₂O₃), Indium-Zinn-Oxid (ITO), Tantalpentoxid (Ta₂O₅), Ceroxid (CeO₂), Yttriumoxid (Y₂O₃), Europiumoxid (Eu₂O₃), Eisenoxide wie zum Beispiel Eisen(II,III)oxid (Fe₃O₄) und Eisen(III)oxid (Fe₂O₃), Hafniumnitrid (HfN), Hafniumcarbid (HfC), Hafniumoxid (HfO₂), Lanthanoxid (La₂O₃), Magnesiumoxid (MgO), Neodymoxid (Nd₂O₃), Praseodymoxid (Pr₆O₁₁), Samariumoxid (Sm₂O₃), Antimontrioxid (Sb₂O₃), Siliziumcarbid (SiC), Siliziumnitrid (Si₃N₄), Siliziummonoxid (SiO), Selentrioxid (Se₂O₃), Zinnoxid (SnO₂), Wolframtrioxid (WO₃), hochbrechende organische Monomere und/oder hochbrechende organische Polymere umfassen oder aus zumindest einem dieser Materialien hergestellt sein.

Die als Dünnschichtelement ausgebildete optische Effektschicht 4 kann direkt auf den Strukturen 3 oder beispielsweise auf der oben erwähnten Haftvermittlerschicht, welche auf den Strukturen 3 angeordnet sein kann, aufgebracht sein.

Die Schichtstärke der einzelnen das Dünnschichtelement bildenden Schichten oder Lagen ist stark übertrieben und unmaßstäblich dargestellt.

Die farbkippende optische Effektschicht 4 kann auch noch eine Reflexionsschicht 8 umfassen. Die zumindest eine Distanzschicht 7 ist dabei zwischen der Absorberschicht 6 und der Reflexionsschicht 8 angeordnet. Die Reflexionsschicht 8 ist auf die Strukturen 3 aufgebracht, und kann insbesondere auf diese aufgedruckt und/oder aufgedampft werden. Ebenfalls ist es möglich, diese Reihenfolge in der optischen Effektschicht auch umzukehren, sodass die Absorberschicht auf der Haftvermittlerschicht oder den Strukturen 3 angeordnet ist und weiters die Distanzschicht und die Reflexionsschicht. Somit wäre die Anordnung entsprechend der Reihenfolge Strukturen 3 -Absorberschicht 6 - Distanzschicht 7 - Reflexionsschicht 8.

Die Reflexionsschicht 8 kann ein metallisches Material, insbesondere ausgewählt aus der Gruppe, Silber, Kupfer, Aluminium Gold, Platin, Niob, Zinn, oder aus Nickel, Titan, Vanadium, Chrom, Kobalt und Palladium oder Legierungen dieser Materialien, insbesondere Kobalt-Nickel-Legierungen oder zumindest ein hochbrechendes dielektrisches Material mit einem Brechungsindex von größer als 1,65, insbesondere ausgewählt aus der Gruppe Zinksulfid (ZnS), Zinkoxid (ZnO), Titandioxid (TiO₂), Kohlenstoff (C), Indiumoxid (In₂O₃), Indium-Zinn-Oxid (ITO), Tantalpentoxid (Ta₂O₅), Ceroxid (CeO₂), Yttriumoxid (Y₂O₃), Europiumoxid (Eu₂O₃), Eisenoxide wie zum Beispiel Eisen(II,III)oxid (Fe₃O₄) und Eisen(III)oxid (Fe₂O₃), Hafniumnitrid (HfN), Hafniumcarbid (HfC), Hafniumoxid (HfO₂), Lanthanoxid (La₂O₃), Magnesiumoxid (MgO), Neodymoxid (Nd₂O₃), Praseodymoxid (Pr₆O₁₁), Samariumoxid (Sm₂O₃), Antimontrioxid (Sb₂O₃), Siliziumcarbid (SiC), Siliziumnitrid (Si₃N₄), Siliziummonoxid (SiO), Selentrioxid (Se₂O₃), Zinnoxid (SnO₂), Wolframtrioxid (WO₃), hochbrechende organische Monomere und/oder hochbrechende organische Polymere umfassen oder aus zumindest einem dieser Materialien hergestellt sein. Dies gilt für alle in den Ausführungsbeispielen beschriebenen Reflexionsschichten 8.

Anstelle der oben genannten Reflexionsschicht 8 kann aber auch eine weitere Absorberschicht vorgesehen sein.

Das Sicherheitselement 1 kann weiters eine Trägerschicht 9 umfassen. Die Trägerschicht 9 kann aus einem Kunststoffwerkstoff gebildet sein. Weiters können auch mehrere Lagen die Trägerschicht 9 bilden. Der Kunststoff kann aus einem lichtdurchlässigen und/oder thermoplastischen Kunststoffmaterial gebildet sein. Als Werkstoff für die Trägerschicht 9 kann zumindest eines der Materialien aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon, (PEEK) Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefincopolymere (COC), Polyoximethylen (POM), Acrylnitrilbutadienstyrol (ABS), Polyvinylchlorid (PVC) Ethylentetrafluorethylen (ETFE), Polytetrafluorethylen (PTFE), Polyvinylfluorid (PVF), Polyvinylidenfluorid (PVDF), Ethylen-Tetrafluorethylen-Hexafluorpropylen-Fluorterpolymer (EFEP), Cellulose- oder Lignin-basierte Kunststoffe, Polyhydroxyalkanoate (PHA), thermo-plastische Stärke (TPS), Polymilchsäure (PLA), Polycaprolacton (PCL), Polybutylensuccinat (PBS), und Polybutylenadipat-terephthalat (PBAT) und/oder zumindest einen recycelten und/oder biologisch und/oder marin abbaubare Kunststoff und/oder Mischungen und/oder Co-Polymere dieser Materialien umfassen oder aus zumindest einem dieser Materialien hergestellt sein. Die Trägerschicht kann dabei eine Dicke von 5 µm bis 1000 µm, besonders bevorzugt eine Dicke von 10 µm bis 50 µm, aufweisen.

Das Anordnen oder Aufbringen der optischen Effektschicht 4 oder deren Lagen auf die Strukturen 3 kann z.B. durch einen Druckvorgang und/oder einen Bedampfungsvorgang oder von mehreren derselben erfolgen.

Wenngleich auch die optische Effektschicht 4 in dem vorliegenden Zusammenhang als Dünnschichtelement beschrieben ist, so kann die optische Effektschicht 4 jedoch auch beispielsweise mittels einer farbkippende Pigmente enthaltenden Tinte oder Druckfarbe, eines farbkippende Pigmente enthaltenden Lacks oder einer Flüssigkristallschicht, insbesondere in Kombination mit einer an einer Sichtseite der Flüssigkristallschicht abgewandten Seite angebrachten, dunklen Verstärkerschicht, realisiert sein.

Die Strukturen 3 können direkt in die Trägerschicht 9 eingeprägt werden. Beispielsweise durch Erwärmen der Trägerschicht 9 und Einprägen der Strukturen mittels eines Prägewerkzeuges, wie einer Prägewalze.

Eine weitere alternative Möglichkeit besteht darin, zur Aufnahme der Strukturen 3 eine eigene weitere Schicht 10 vorzusehen. Die weitere Schicht 10 kann direkt auf die Trägerschicht 9 aufgebracht sein. So kann z.B. die weitere Schicht 10 von einem Prägelack gebildet sein, welcher entsprechend zur Anordnung der Strukturen 3 umgeformt ist. Dies kann wiederum mittels einer Abformvorrichtung oder eines Abformelements in einem Prägeverfahren erfolgen. Diese weitere Schicht, insbesondere eine Prägelackschicht, mit den darin ausgeformten Strukturen 3 kann beispielsweise eine Dicke von 0,5 µm bis 300 µm, insbesondere von 0,8 µm bis 50 µm, bevorzugt von 1 µm bis 10 µm aufweisen.

Weiters kann zwischen der Schicht 10 und der Trägerschicht 9 zumindest eine Zwischenschicht vorgesehen sein, welche z.B. durch einen Haftvermittler, einen Primer, einen Kleber oder dergleichen ausgebildet sein kann.

Als oberste Schicht bzw. äußerste Schicht auf der optischen Effektschicht 4 kann z.B. eine hier nicht dargestellte Schutzschicht vorgesehen sein, welche den gesamten Schicht- und/oder Lagenaufbau vor mechanischen Beschädigungen wie z.B. Kratzern, Riefen oder dergleichen schützt. Es könnte die Schutzschicht auch auf der von der optischen Effektschicht abgewendeten Seite der Trägerschicht 9 angeordnet sein. Eine beidseitige Anordnung wäre auch denkbar. Bevorzugt kann mittels der Schutzschicht auch eine ebenflächige Ausbildung des Sicherheitselements 1 erzielt werden.

Es sei erwähnt, dass der Schichtaufbau, sowie die Anordnung weiterer Schichten abhängig von der Art der Anbringung des Sicherheitselementes auf einem Sicherheitsgegenstand ist, da hierbei die zu betrachtende Seite des Sicherheitselementes nach der Anbringung ausschlaggebend ist. Somit kann die Sichtseite wie in den Figuren dargestellt, von oben betrachtet sein, es ist aber auch möglich, das Sicherheitselement von einer Sichtseite von unten zu betrachten, z.B. durch einen Träger.

An dieser Stelle sei darauf hingewiesen, dass die Formulierung "eine Schicht ist auf etwas aufgebracht" so zu verstehen ist, dass die Schicht direkt aufgebracht sein kann, oder dass sich zwischen der aufgebrachten Schicht und dem, worauf die Schicht aufgebracht ist, noch eine oder mehrere Zwischenschichten befinden können. An dieser Stelle sei auch darauf hingewiesen, dass zwischen den in diesem Dokument beschriebenen Schichten eine oder auch mehrere Zwischenschichten angeordnet sein können. Es ist somit nicht zwingend erforderlich, dass die beschriebenen Schichten einander kontaktieren. Weiters sei darauf hingewiesen, dass der Begriff Schicht in diesem Dokument so zu verstehen ist, dass eine Schicht auch aus mehreren Teilschichten aufgebaut sein kann.

Weiters kann der gesamte Schichtaufbau des Sicherheitselement auf oder in einen zu sichernden Gegenstand haftend aufgebracht werden oder auch als Transferelement ausgebildet sein, bei welchem zumindest ein aus den diffraktiven Strukturen gebildetes Sicherheitsmerkmal mitsamt ggfls. weiteren Schichten auf den zu sichernden Gegenstand übertragen und hierbei von einer Transferfolie gelöst wird.

### Bezugszeichenaufstellung

- 1: Sicherheitselement
- 2: Bereich
- 3: Strukturen
- 4: Effektschicht
- 5: Bereich
- 6: Absorberschicht
- 7: Distanzschicht
- 8: Reflexionsschicht
- 9: Trägerschicht
- 10: Schicht

## Patentansprüche

1. Sicherheitselement (1) insbesondere für Wertpapiere, Sicherheitspapiere oder Sicherheitsgegenstände, wie Banknoten, Ausweise, Kreditkarten, wobei das Sicherheitselement (1) zumindest einen Bereich (2) mit optisch wirksamen, diffraktiven Strukturen (3) aufweist, **dadurch gekennzeichnet, dass** ein durch die optisch wirksamen, diffraktiven Strukturen (3) erzeugter Gesamteindruck für ein unbewaffnetes Auge achromatisch erscheint.

2. Sicherheitselement nach Anspruch 1, **dadurch gekennzeichnet, dass** das Sicherheitselement ein aus Bereichen, insbesondere Pixel, aufgebautes Bild aufweist.

3. Sicherheitselement nach einem der Ansprüche 1 oder 2, **dadurch gekennzeichnet, dass** die optisch wirksamen Strukturen unregelmäßig, bevorzugt im Wesentlichen zufällig, angeordnet sind, wobei insbesondere eine Frequenz, eine Ausrichtung, Bereichsgrößen und/oder Konturen von Bereichen, in welchen die Strukturen angeordnet sind, und/oder Formen der Strukturen, beispielsweise Krümmungen der Strukturen variieren.

4. Sicherheitselement nach einem der Ansprüche 1 bis 3, **dadurch gekennzeichnet, dass** der achromatische Gesamteindruck durch eine additive Farbmischung von durch die Strukturen erzeugten Farben hervorgerufen ist.

5. Sicherheitselement nach Anspruch 2 bis 4, **dadurch gekennzeichnet, dass** einzelne Bereiche, insbesondere Pixel, jeweils aus mehreren optisch wirksamen Strukturen gebildet sind, wobei die optisch wirksamen Strukturen in den einzelnen Bereichen, insbesondere Pixel, so orientiert sind, dass jeder der Bereiche, insbesondere jedes dieser Pixel, achromatisch erscheint.

6. Sicherheitselement nach einem der Ansprüche 1 bis 5, **dadurch gekennzeichnet, dass** die Strukturen (3) vollflächig oder partiell von zumindest einer optischen Effektschicht (4) abgedeckt sind.

7. Sicherheitselement nach einem der Ansprüche 1 bis 6, **dadurch gekennzeichnet, dass** die Strukturen (3) geprägte Strukturen, insbesondere in eine Prägelackschicht geprägte Strukturen, sind.

8. Sicherheitselement nach einem der Ansprüche 1 bis 7, **dadurch gekennzeichnet, dass** die optische Effektschicht (4) als Dünnschichtelement ausgebildet ist und zumindest eine Absorberschicht (6) und zumindest eine Distanzschicht (7) aufweist.

9. Sicherheitselement nach Anspruch 8, **dadurch gekennzeichnet, dass** die zumindest eine Absorberschicht (6) zumindest ein metallisches Material, insbesondere ausgewählt aus der Gruppe von Nickel, Titan, Vanadium, Chrom, Kobalt, Palladium, Eisen, Wolfram, Molybdän, Niob, Aluminium, Silber, Kupfer und/oder Legierungen dieser Materialien umfasst oder aus zumindest einem dieser Materialien hergestellt ist.

10. Sicherheitselement nach Anspruch 8 oder 9, **dadurch gekennzeichnet, dass** die zumindest eine Distanzschicht (7) ein niederbrechendes dielektrisches Material mit einem Brechungsindex kleiner oder gleich 1,65, insbesondere ausgewählt aus der Gruppe Aluminiumoxid (Al₂O₃), Metallfluoride, beispielsweise Magnesiumfluorid (MgF₂), Aluminiumfluorid (AlF₃), Cerfluorid (CeF₃), Natrium-Aluminium-Fluoride (z.B. Na₃AlF₆ oder Na₅Al₃F₁₄), Siliziumoxid (SIOₓ), Siliziumdioxid (SiO₂), Neodymfluorid (NdF₃), Lanthanfluorid (LaF₃), Samariumfluorid (SmF₃), Bariumfluorid (BaF₂), Calciumfluorid (CaF₂), Lithiumfluorid (LiF), niederbrechende organische Monomere und/oder niederbrechende organische Polymere oder zumindest ein hochbrechendes dielektrisches Material mit einem Brechungsindex größer als 1,65, insbesondere ausgewählt aus der Gruppe Zinksulfid (ZnS), Zinkoxid (ZnO), Titandioxid (TiO₂), Kohlenstoff (C), Indiumoxid (In₂O₃), Indium-Zinn-Oxid (ITO), Tantalpentoxid (Ta₂O₅), Ceroxid (CeO₂), Yttriumoxid (Y₂O₃), Europiumoxid (Eu₂O₃), Eisenoxide wie zum Beispiel Eisen(II,III)oxid (Fe₃O₄) und Eisen(III)oxid (Fe₂O₃), Hafniumnitrid (HfN), Hafniumcarbid (HfC), Hafniumoxid (HfO₂), Lanthanoxid (La₂O₃), Magnesiumoxid (MgO), Neodymoxid (Nd₂O₃), Praseodymoxid (Pr₆O₁₁), Samariumoxid (Sm₂O₃), Antimontrioxid (Sb₂O₃), Siliziumcarbid (SiC), Siliziumnitrid (Si₃N₄), Siliziummonoxid (SiO), Selentrioxid (Se₂O₃), Zinnoxid (SnO₂), Wolframtrioxid (WO₃), hochbrechende organische Monomere und/oder hochbrechende organische Polymere umfasst oder aus zumindest einem dieser Materialien hergestellt ist.

11. Sicherheitselement nach einem der Ansprüche 8 bis 10 **dadurch gekennzeichnet, dass** die als Dünnschichtelement ausgebildete optische Effektschicht (4) weiters noch zumindest eine Reflexionsschicht (8) und/oder eine zweite Absorberschicht umfasst, wobei die zumindest eine Distanzschicht (7) zwischen der zumindest einen ersten Absorberschicht (6) und der zumindest einen Reflexionsschicht (8) und/oder der zumindest einen zweiten Absorberschicht angeordnet ist.

12. Sicherheitselement nach Anspruch 11, **dadurch gekennzeichnet, dass** die zumindest eine Reflexionsschicht (8) zumindest ein metallisches Material, insbesondere ausgewählt aus der Gruppe Silber, Kupfer, Aluminium, Gold, Platin, Niob, Zinn, oder aus Nickel, Titan, Vanadium, Chrom, Kobalt und Palladium oder Legierungen dieser Materialien, insbesondere Kobalt-Nickel-Legierungen oder zumindest ein hochbrechendes dielektrisches Material mit einem Brechungsindex von größer als 1,65, insbesondere ausgewählt aus der Gruppe Zinksulfid (ZnS), Zinkoxid (ZnO), Titandioxid (TiO₂), Kohlenstoff (C), Indiumoxid (In₂O₃), Indium-Zinn-Oxid (ITO), Tantalpentoxid (Ta₂O₅), Ceroxid (CeO₂), Yttriumoxid (Y₂O₃), Europiumoxid (Eu₂O₃), Eisenoxide wie zum Beispiel Eisen(II,III)oxid (Fe₃O₄) und Eisen(III)oxid (Fe₂O₃), Hafniumnitrid (HfN), Hafniumcarbid (HfC), Hafniumoxid (HfO₂), Lanthanoxid (La₂O₃), Magnesiumoxid (MgO), Neodymoxid (Nd₂O₃), Praseodymoxid (Pr₆O₁₁), Samariumoxid (Sm₂O₃), Antimontrioxid (Sb₂O₃), Siliziumcarbid (SiC), Siliziumnitrid (Si₃N₄), Siliziummonoxid (SiO), Selentrioxid (Se₂O₃), Zinnoxid (SnO₂), Wolframtrioxid (WO₃), hochbrechende organische Monomere und/oder hochbrechende organische Polymere umfasst oder aus zumindest einem dieser Materialien hergestellt ist.

13. Sicherheitselement nach einem der Ansprüche 1 bis 12, **dadurch gekennzeichnet, dass** es eine Trägerschicht (9) aus einem Kunststoff umfasst, wobei insbesondere der Kunststoff aus einem lichtdurchlässigen und/oder thermoplastischen Kunststoff gebildet ist, und dass die Trägerschicht bevorzugt zumindest eines der Materialien aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon, (PEEK) Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefincopolymere (COC), Polyoximethylen (POM), Acrylnitrilbutadienstyrol (ABS), Polyvinylcholrid (PVC) Ethylentetrafluorethylen (ETFE), Polytetrafluorethylen (PTFE), Polyvinylfluorid (PVF), Polyvinylidenfluorid (PVDF), Ethylen-Tetrafluorethylen-Hexafluorpropylen-Fluorterpolymer (EFEP), Cellulose- oder Lignin-basierte Kunststoffe, Polyhydroxyalkanoate (PHA), thermo-plastische Stärke (TPS), Polymilchsäure (PLA), Polycaprolacton (PCL), Polybutylensuccinat (PBS), und Polybutylenadipat-terephthalat (PBAT) und/oder zumindest einen recycelten und/oder biologisch und/oder marin abbaubare Kunststoff und/oder Mischungen und/oder Co-Polymere dieser Materialien umfasst oder aus zumindest einem dieser Materialien hergestellt ist.
